(19) **Europäisches Patentamt**
**European Patent Office**
**Office européen des brevets**

(11) **EP 1 867 969 B1**

(12) **FASCICULE DE BREVET EUROPEEN**

(45) Date de publication et mention
de la délivrance du brevet:
**20.08.2008 Bulletin 2008/34**

(51) Int Cl.:
*G01J 3/28* *(2006.01)*     *G01J 3/26* *(2006.01)*

(21) Numéro de dépôt: **07109913.9**

(22) Date de dépôt: **08.06.2007**

(54) **Système d'imagerie spectrométrique**

Bildgebendes Spektrometer

Imaging spectrometer

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **13.06.2006 FR 0605252**

(43) Date de publication de la demande:
**19.12.2007 Bulletin 2007/51**

(73) Titulaire: **SAGEM Défense Sécurité
75015 Paris (FR)**

(72) Inventeur: **Pealat, Michel
c/o Sagem Defense Securite
75015, PARIS (FR)**

(74) Mandataire: **Cabinet Plasseraud
52 rue de la Victoire
75440 Paris Cedex 09 (FR)**

(56) Documents cités:
**JP-A- 6 235 660     JP-A- 63 215 925**

**Description**

La présente invention concerne un système d'imagerie spectrométrique, qui est capable de produire une image d'un objet situé dans un champ d'observation ainsi qu'une caractéristique spectrale du rayonnement reçu en chaque point de l'image. Elle concerne aussi des utilisations d'un tel système.

Il est parfois nécessaire d'enregistrer une image et de disposer en outre d'une analyse spectrale de celle-ci, pour interpréter correctement l'image ou pour détecter la présence d'objets particuliers dans le champ d'observation. En effet, certains objets peuvent ne pas être visibles sur une image qui est formée à partir d'un rayonnement ayant une première longueur d'onde, et être visibles sur une image qui est formée à partir d'un rayonnement à une seconde longueur d'onde distincte de la première. Il est alors nécessaire de connaître l'intensité du rayonnement reçu en chaque point de l'image pour plusieurs longueurs d'onde, et de corréler les motifs détectés aux différentes longueurs d'onde. Un tel mode opératoire est utile, notamment, pour révéler la présence d'un objet dissimulé, ou camouflé, ou pour révéler la présence d'un nuage gazeux, par exemple un nuage de gaz toxique.

Pour répondre à ce besoin, il est possible, par exemple, de réaliser plusieurs prises de vues successives avec un système qui est sensible à plusieurs longueurs d'onde, en variant la longueur d'onde de sensibilité entre deux prises de vues successives. Un tel fonctionnement peut être obtenu en changeant un filtre qui est placé devant l'objectif d'une caméra. Mais les multiples prises de vues successives qui sont alors nécessaires en changeant le filtre à chaque prise de vue ne permettent pas d'observer correctement un objet mobile. En outre, les changements de filtres nécessitent de prévoir un dispositif à pièces mobiles, qui est complexe, encombrant et onéreux.

Il est aussi possible d'utiliser un système d'imagerie spectrométrique qui est capable d'enregistrer, pour chaque point d'une fente d'entrée, une caractéristique de distribution spectrale, et de balayer un champ d'entrée en déplaçant la fente. Mais l'enregistrement de données spectrométriques pour chaque position de la fente d'entrée est aussi mal adapté à l'observation d'un objet mobile. En outre, un dispositif à pièces mobiles est encore nécessaire pour déplacer de la fente d'entrée.

Enfin, le document US 2002 012120 divulgue un système d'imagerie spectrométrique qui est constitué d'une caméra et d'un filtre fixe placé devant l'objectif de la caméra, et dont le filtrage dépend de l'angle d'incidence des rayons correspondant aux points d'une image enregistrée. Un champ large peut alors être observé par balayage en tournant le système et en réalisant simultanément des prises de vues successives qui se recouvrent en partie. Le rayonnement qui provient de chaque point situé dans le champ d'observation est alors saisi à plusieurs reprises avec des angles d'incidence variables, et donc avec des caractéristiques de filtrage variables. De cette façon, une image complète d'un large champ d'observation et une caractéristique de la distribution spectrale du rayonnement en chaque point de ce champ sont obtenues simultanément, en combinant les prises de vues successives qui se recouvrent avec un décalage croissant. Mais le filtre comprend lui-même deux prismes, deux objectifs et un masque de filtrage. Il est donc encombrant, lourd et onéreux, ce qui réduit les applications d'un tel système.

L'invention propose alors un système d'imagerie spectrométrique simplifié et robuste, qui permet d'acquérir simultanément une image à deux dimensions d'un large champ d'observation ainsi qu'une caractéristique de la distribution spectrale du rayonnement issu de chaque point du champ.

Pour cela, l'invention propose un système d'imagerie spectrométrique qui comprend :

- une camera comprenant elle-même un objectif et une matrice de photodétecteurs, et qui est agencée pour saisir une image formée à travers l'objectif sur la matrice ;
- un dispositif interférentiel de Fabry-Pérot, comprenant deux lames parallèles séparées d'un écart fixe, chaque lame étant à la fois transparente et réfléchissante ; et
- un support mobile en rotation autour d'un axe de rotation perpendiculaire à l'axe optique de l'objectif d'une part, et à l'axe du dispositif de Fabry-Pérot d'autre part.

Le dispositif de Fabry-Pérot est disposé devant l'objectif de la caméra. Il est orienté de sorte que l'axe de ce dispositif, qui est perpendiculaire aux deux lames, forme, avec l'axe optique de l'objectif, un angle fixe supérieur à un demi-angle d'ouverture d'un champ d'entrée correspondant à chaque image saisie. En outre, la caméra et le dispositif de Fabry-Pérot sont montés sur le support de façon à être fixes l'un par rapport à l'autre pendant une rotation du support, et de sorte qu'une image saisie par la caméra est formée à partir de rayons qui ont traversé l'espace entre les lames du dispositif de Fabry-Pérot.

Ainsi, avec un système selon l'invention, un large champ d'observation est balayé, lors d'une rotation du support, par une fenêtre d'acquisition à deux dimensions qui correspond au champ d'entrée de la caméra. Un filtrage variable est associé à une direction de la fenêtre qui est parallèle à la direction du balayage. Lorsque le balayage est réalisé de sorte que des images enregistrées successivement se recouvrent, le rayonnement qui est issu d'un même point du champ d'observation est saisi sous des angles d'incidence différents lors de prises de vues successives. Il est ainsi détecté avec des caractéristiques de filtrage variables, et une caractéristique de sa distribution spectrale peut être reconstituée en combinant les intensités détectées dans les images qui contiennent ce point.

Le filtrage variable le long de la fenêtre est produit par le dispositif de Fabry-Pérot qui est placé dans une position inclinée par rapport à l'axe optique de la caméra. Deux bords opposés de la matrice de photodétecteurs, parallèles à l'axe de rotation du support, correspondent donc à des caractéristiques de filtrage différentes, et le filtrage varie continûment entre les deux bords. L'orientation du dispositif de Fabry-Pérot par rapport à la caméra, avec un angle entre leurs axes respectifs qui est supérieur au demi-angle d'ouverture du champ d'entrée de la caméra, assure qu'aucune donnée spectrale n'est acquise de façon redondante. De cette façon, une information spectrale est obtenue, qui est maximale.

Un système selon l'invention combine donc l'exécution d'un balayage pour enregistrer une scène dans un large champ d'observation avec l'acquisition de la distribution spectrale du rayonnement produit par chaque point de la scène. En dehors du support rotatif, le système ne comporte pas d'éléments mobiles. Il est donc simple à réaliser et peu fragile. Notamment, il est peu perturbé par des chocs ou des vibrations transmises au support. Autrement dit, un système d'imagerie spectrométrique selon l'invention est particulièrement robuste.

En outre, l'acquisition des images successives pendant le balayage peut être rapide, puisqu'aucun mécanisme mobile n'est activé entre deux prises de vues, en dehors de la rotation du support. Un système selon l'invention peut donc permettre d'observer correctement un objet mobile, même si la vitesse de cet objet est importante.

Les éléments constitutifs d'un système selon l'invention, à savoir une caméra, un dispositif de Fabry-Pérot et un support rotatif sont disponibles commercialement ou peuvent être produits en utilisant des techniques bien maîtrisées à ce jour. En outre, ces éléments sont peu onéreux et leur assemblage pour constituer le système d'imagerie spectrométrique est relativement simple.

Enfin, un système selon l'invention est très compact et peu encombrant. Il est donc très adapté pour des utilisations à bord d'engins mobiles d'observation au sol, à bord d'aéronefs ou à bord de satellites, notamment dans le cadre de missions scientifiques, spatiales ou militaires.

En particulier, il peut être utilisé pour détecter, dans le champ d'observation, un objet dont la présence ne peut pas être distinguée ou est peu perceptible à au moins une longueur d'onde. Une telle détection est parfois appelée décamouflage, en ce sens qu'elle a pour but de révéler un objet qui est dissimulé pour une vision dans un domaine spectral réduit. Par exemple, l'objet peut être dissimulé pour une vision en lumière visible, ou pour une observation effectuée dans un intervalle réduit de longueur d'onde infrarouge.

Le système peut aussi être utilisé pour révéler un nuage de gaz présent dans une zone déterminée. Il peut s'agir en particulier de rechercher la présence d'un gaz de pollution, d'un gaz toxique ou d'un gaz de combat.

L'invention concerne aussi un procédé de détection d'un objet et d'obtention d'une caractéristique spectrale de cet objet, suivant lequel plusieurs images de l'objet sont successivement saisies au moyen d'un système tel que décrit précédemment, en tournant le support entre deux images successives.

De préférence, lorsque les photodétecteurs de la matrice sont disposés en lignes et en colonnes respectivement parallèles au plan de rotation et à l'axe de rotation du support, les images sont saisies pendant la rotation du support à des intervalles de temps qui sont déterminés de sorte que deux images successives sont décalées d'une colonne sur la matrice de photodétecteurs.

D'autres particularités et avantages de la présente invention apparaîtront dans la description ci-après de deux exemples de réalisation non- limitatifs, en référence aux dessins annexés, dans lesquels :

- la figure 1 représente un système selon un premier mode de réalisation de l'invention ;

- les figures 2a et 2b illustrent le principe d'acquisition de données d'un système selon l'invention ; et

- la figure 3 illustre un second mode de réalisation de l'invention.

Pour raison de clarté, les dimensions des éléments représentés sur les figures ne sont pas en proportion avec des dimensions ou des rapports de dimensions réels. En outre, des références identiques sur des figures différentes désignent des éléments identiques ou qui ont des fonctions identiques.

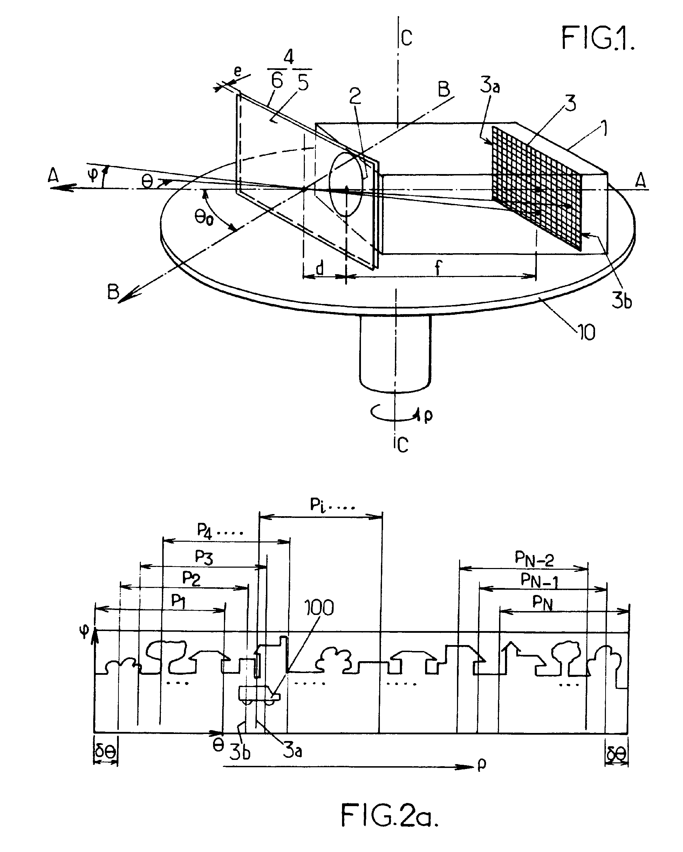

Conformément à la figure 1, une caméra 1 et un dispositif interférentiel 4 sont fixés sur un support 10 mobile en rotation autour d'un axe C-C.

Le support 10, qui est représenté symboliquement par un disque, peut être d'un type quelconque qui permet une rotation ρ autour de l'axe C-C. Pour une utilisation terrestre du système, l'axe C-C peut être orienté verticalement. La rotation ρ est produite par un moteur non représenté et est contrôlée en réalisant un asservissement angulaire, d'une façon qui est connue de l'Homme du métier.

La caméra 1 peut être d'un type commercial, qui comporte notamment un objectif 2 et une matrice de photodétecteurs 3. L'objectif 2 est représenté d'une façon simplifiée sous forme d'une lentille convergente unique, mais tout objectif connu adapté au domaine de longueur d'onde concerné peut être utilisé alternativement. A titre d'exemple, la matrice 3 peut être constituée de 288 lignes horizontales de photodétecteurs, qui sont superposées verticalement pour former en outre des colonnes de photodétecteurs parallèles à l'axe C-C. Chaque ligne comprend 384 photodétecteurs. La matrice 3 est située dans le plan focal image de l'objectif 2, correspondant à une distance focale f de 20 mm (millimètres) par exemple. Lorsque la matrice 3 a un pas horizontal et un pas vertical égaux chacun à 25 $\mu$m (micromètres), la caméra 1 a un champ d'ouverture angulaire $\Delta\theta$ x $\Delta\varphi$ = 27° x 20°, où $\theta$ et $\varphi$ sont respectivement les angles de d'azimuth et de hauteur repérés par rapport à l'axe optique A-A de l'objectif 2.

Le dispositif interférentiel 4 est du type couramment désigné par Fabry-Pérot. Il comprend deux lames semi-réfléchissantes référencées 5 et 6 sur la figure, qui sont disposées verticalement et parallèlement l'une à l'autre. De façon connue, chaque lame 5, 6 comprend un substrat transparent plan qui est recouvert sur sa face tournée vers l'autre lame par une structure à couches à la fois réfléchissante et transparente, et sur l'autre face par une structure à couches antiréfléchissante. Une telle constitution d'un dispositif de Fabry-Pérot est supposée connue, et n'est pas reprise ici. On se reportera avantageusement à l'un des nombreux ouvrages spécialisés détaillant ce type de dispositifs interférentiels. Le dispositif de Fabry-Pérot 4 peut posséder une finesse qui est comprise entre 10 et 500, pouvant être sensiblement égale à 25 ou 40, par exemple.

Le dispositif 4 est placé sur le support 10 dans une position fixe par rapport à la caméra 1, devant l'objectif 2. La distance d entre le dispositif 4 et l'objectif 2 peut être sélectionnée de sorte que le dispositif 4 soit situé à l'endroit d'une pupille d'entrée de la caméra 1. Dans ce cas, le dispositif 4 peut avoir des dimensions minimales sans réduire le champ d'entrée de la caméra. B-B désigne un axe perpendiculaire aux lames 5 et 6, appelé axe du dispositif de Fabry-Pérot. Le dispositif 4 est de préférence fixé sur le support 10 de sorte les axes A-A et B-B forment un angle $\theta_0$ compris entre 30 et 60 degrés, ou compris entre 40 et 50 degrés. L'angle $\theta_0$ est donc supérieur au demi-angle d'ouverture du champ d'entrée de la caméra 1, ce dernier étant égal $\Delta\theta/2$.

A titre d'exemple, la caméra 1 et le dispositif de Fabry-Pérot 4 peuvent être adaptés de sorte que chaque image saisie par la caméra est une image infrarouge. Plus particulièrement, chaque photodétecteur de la matrice 3 peut produire un signal qui correspond à une énergie de rayonnement reçue dans la bande de longueur d'onde comprise entre 8 $\mu$m et 12 $\mu$m. Dans ce cas, lorsque les images saisies par la caméra 1 sont formées par des rayons qui traversent le dispositif 4, l'angle $\theta_0$ entre les axes A-A et B-B peut être égal à 41 degrés et le dispositif 4 peut avoir une épaisseur optique e de 6,85 $\mu$m. Pour les caractéristiques de la caméra 1 qui ont été indiquées plus haut, le dispositif 4 transmet les longueurs d'onde de 7,99 $\mu$m et 12,08 $\mu$m, respectivement pour des rayons qui parviennent sur les deux bords verticaux et opposés 3a et 3b de la matrice 3. Entre les bords 3a et 3b, la longueur d'onde centrale $\lambda$ du rayonnement qui est transmis par le dispositif 4 pour un angle d'incidence $\theta$ repéré par rapport à l'axe optique A-A de la caméra 1 est alors :

$$\lambda(\theta) = \frac{2e\cos(\theta + \theta_0)}{k + \varepsilon(\lambda)/\pi} \qquad (1)$$

où k est l'ordre d'interférence et $\varepsilon(\lambda)$ est le saut de phase aux interfaces des lames 5 et 6. Pour les valeurs numériques citées plus haut, k est égal à 1. L'épaisseur e et l'angle $\theta_0$ peuvent donc être variés pour adapter la bande de longueur d'onde correspondant au filtrage réalisé par le dispositif 4. Par ailleurs, les inventeurs mentionnent que la longueur d'onde qui est donnée par la formule 1 correspond rigoureusement à une hauteur angulaire $\varphi$ qui est nulle. Cette longueur d'onde varie lorsque la hauteur $\varphi$ est non nulle, d'une façon qui peut être déduite de calculs d'interférences supposés connus. Une telle variation, qui peut correspondre à la largeur de trois colonnes de la matrice 3, peut être prise en compte et/ou corrigée aisément lors d'un traitement des images saisies.

La figure 2a illustre un paysage observé avec un système tel que décrit précédemment. La paysage est enregistré sous forme d'une succession de prises de vues $P_1$, $P_2$,.... $P_N$, N étant un nombre entier pouvant être égal à 400, par exemple. Les prises de vues successives sont saisies pendant une rotation $\rho$ du support 10 et constituent un balayage du paysage parallèlement à la direction de variation de l'angle d'azimuth $\theta$. Le champ d'observation peut alors être reconstitué en superposant toutes les images enregistrées lors des prises de vues $P_1$, $P_2$,..., $P_N$, avec des décalages qui correspondent à la rotation $\rho$.

Un objet qui est situé à un endroit quelconque dans le champ d'observation apparaît avec des décalages variables lors des prises de vues successives, selon la direction de variation de $\theta$, entre les extrémités opposées des images qui correspondent aux deux bords 3a et 3b de la matrice 3. Par exemple, la voiture 100 apparaît dans le champ d'entrée de la caméra 1 à la prise de vue P2. Elle apparaît sur le bord 3b de la matrice 3 et est détectée à la longueur d'onde de 12,08 $\mu$m. Elle est ensuite progressivement détectée à des longueurs d'onde décroissantes pour les prises de vues suivantes, jusqu'à 7,99 $\mu$m lorsque, lors du balayage, la voiture 100 apparaît sur le bord 3a à la prise de vue notée $P_i$. Ainsi, si la voiture 100 n'est pas discernable en lumière visible, parce qu'elle possède une couleur identique à celle du paysage de fond, ou si elle n'est pas discernable dans la prise de vue $P_1$ parce qu'elle ne produit pas de rayonnement à 12,08 $\mu$m, elle peut être révélée dans l'image correspondant à la prise de vue $P_i$ si elle produit un rayonnement à 7,99 $\mu$m. De la même façon, la voiture 100 peut être révélée dans n'importe quelle image correspondant à une prise de vue intermédiaire entre $P_1$ et $P_i$.

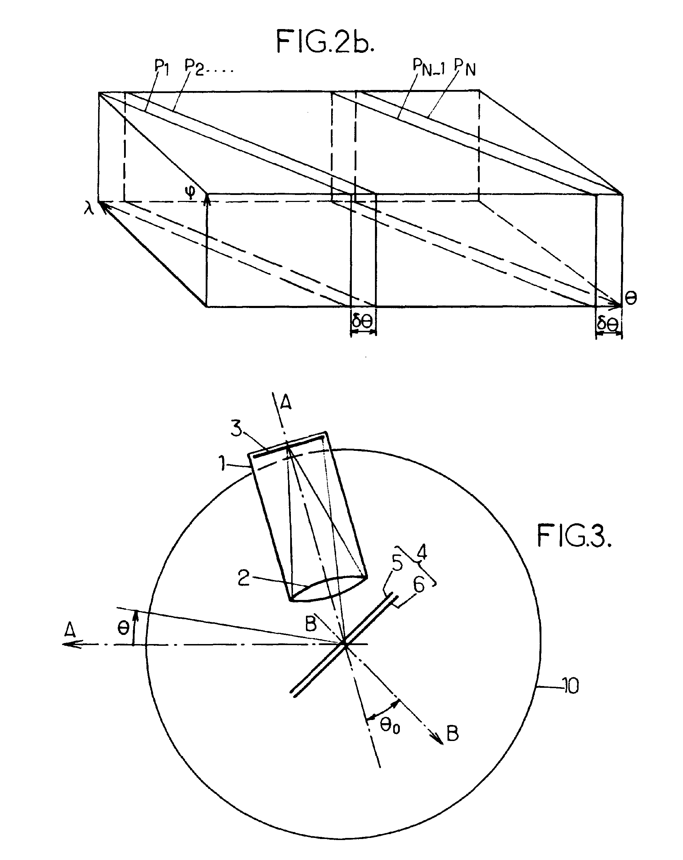

Sur les figures 2a et 2b, $\delta\theta$ désigne l'incrément de la rotation $\rho$ du support 10 entre deux prises de vues successives. La distribution spectrale du rayonnement issu de chaque point du champ d'observation est caractérisée avec une résolution maximale lorsque l'incrément $\delta\theta$ correspond au passage d'une colonne de la matrice 3 à une colonne adjacente. Une résolution spectrale de 7 cm$^{-1}$, ou 7 nm, est ainsi obtenue pour le système d'imagerie spectrométrique qui est décrit en détail ici.

La figure 2b illustre le principe d'une acquisition de données à la fois d'imagerie et spectrales, telle qu'elle est réalisée en utilisant un système selon l'invention. Dans un espace à trois dimensions repéré par deux axes qui correspondent respectivement aux variations des angles d'azimuth $\theta$ et de hauteur $\varphi$, et par un troisième axe de longueur d'onde $\lambda$, chaque prise de vue $P_1$, $P_2$,..., $P_N$ correspond à une coupe de cet espace selon un plan parallèle à l'axe $\varphi$ et orienté en biais par rapport aux axes 8 et $\lambda$. Le balayage $\rho$ correspond alors à un déplacement de ce plan de coupe parallèlement à l'axe $\theta$. Les prises de vues successives $P_1$, $P_2$,..., $P_N$ fournissent alors les valeurs spectrales de l'intensité du rayonnement en des points d'un maillage de cet espace à trois dimensions. Ce maillage est fixé, parallèlement aux axes $\theta$ et $\varphi$, par les pas horizontal et vertical des photodétecteurs de la matrice 3, respectivement. Selon l'axe $\lambda$, le pas moyen du maillage est sensiblement égal à $(2e\sin\theta_0)\times\delta\theta$ et est limité, en valeur inférieure, par la largeur des colonnes de la matrice 3.

Le système d'imagerie spectrométrique selon l'invention qui vient d'être décrit correspond à une utilisation du dispositif de Fabry-Pérot 4 en mode de transmission. Autrement dit, la caméra 1 et le dispositif de Fabry-Pérot 4 sont agencés de sorte que chaque image saisie par la caméra 1 est formée à partir de rayons qui ont traversé le dispositif 4.

Selon un autre agencement possible de la caméra 1 et du dispositif de Fabry-Pérot 4, chaque image saisie par la caméra peut être formée à partir de rayons qui sont réfléchis par le dispositif de Fabry-Pérot. Le dispositif de Fabry-Pérot est alors utilisé en mode de réflexion. La figure 3 est une représentation de principe d'un tel système par réflexion, vu de dessus. D'une façon qui sera comprise de l'Homme du métier, l'agencement d'un système selon l'invention dans lequel le dispositif de Fabry-Pérot 4 est utilisé en mode de réflexion peut être déduit de l'agencement du système par transmission qui est illustré à la figure 1, en repliant l'axe optique A-A de l'objectif 2. L'axe A-A est replié conformément aux lois de Descartes de la réflexion, au niveau des lames 5 et 6. En dehors de l'apparence des images enregistrées, le fonctionnement d'un système basé sur l'utilisation en réflexion du dispositif de Fabry-Pérot est sensiblement identique à celui qui a été décrit plus haut.

Les caractéristiques spectrales d'un dispositif de Fabry-Pérot qui est utilisé en transmission et en réflexion sont différentes, tout en étant complémentaires. La caractéristique spectrale en transmission est formée d'une succession de pics étroits de valeurs élevées. Chaque image qui est enregistrée au moyen d'un système conforme à la figure 1 - i.e. en mode de transmission - est donc formée d'une succession de bandes d'images verticales qui correspondent respectivement à des longueurs d'onde quasi-pures. A la différence, chaque image qui est enregistrée au moyen d'un système conforme à la figure 3 - i.e. en mode de réflexion - est formée d'une succession de bandes d'images verticales qui correspondent à l'ensemble de la bande spectrale analysée dans laquelle une ou plusieurs longueurs d'onde sont supprimées. Pour cette raison, un avantage d'un système qui est basé sur une utilisation d'un dispositif de Fabry-Pérot en mode de réflexion réside dans l'obtention d'images qui constituent chacune, individuellement, une meilleure représentation d'une scène observée.

Il est entendu que les valeurs numériques qui ont été citées pour les modes de réalisation de l'invention décrits en détail ci-dessus n'ont qu'un but illustratif. En particulier l'invention peut être mise en oeuvre pour réaliser des détections dans d'autres domaines spectraux que la bande comprise entre 8 et 12 $\mu$m. A la lecture de la description faite de l'invention, l'Homme du métier saura adapter chaque valeur numérique à l'application envisagée pour le système.

## Revendications

**1.** Système d'imagerie spectrométrique comprenant :

- une camera (1) comprenant un objectif (2) et une matrice de photodétecteurs (3), agencée pour saisir une image formée à travers l'objectif sur la matrice ;
- un dispositif interférentiel de Fabry-Pérot (4), comprenant deux lames (5, 6) parallèles séparées d'un écart fixe, chaque lame étant à la fois transparente et réfléchissante, ledit dispositif de Fabry-Pérot étant disposé devant l'objectif de la caméra et orienté de sorte qu'un axe dudit dispositif de Fabry-Pérot (B-B), perpendiculaire aux deux lames, forme, avec un axe optique dudit objectif (A-A), un angle fixe ($\theta_0$) supérieur à un demi-angle d'ouverture d'un champ d'entrée correspondant à chaque image saisie ; et
- un support (10) mobile en rotation autour d'un axe de rotation (C-C) perpendiculaire à l'axe optique de l'objectif (A-A) d'une part, et à l'axe du dispositif de Fabry-Pérot (B-B) d'autre part,

la caméra (1) et le dispositif de Fabry-Pérot (4) étant montés sur le support (10) de façon à être fixes l'un par rapport à l'autre pendant une rotation du support, et de sorte qu'une image saisie par la caméra est formée à partir de rayons ayant traversé l'espace entre les lames (5, 6) du dispositif de Fabry-Pérot.

2. Système selon la revendication 1, dans lequel l'angle entre l'axe du dispositif de Fabry-Pérot et l'axe optique de l'objectif ($\theta_0$) est compris entre 30 et 60 degrés.

3. Système selon la revendication 2, dans lequel l'angle entre l'axe du dispositif de Fabry-Pérot et l'axe optique de l'objectif ($\theta_0$) est compris entre 40 et 50 degrés.

4. Système selon l'une quelconque des revendications 1 à 3, dans lequel la caméra (1) et le dispositif de Fabry-Pérot (4) sont agencés de sorte qu'une image saisie par la caméra est formée à partir de rayons ayant traversé le dispositif de Fabry-Pérot, en mode de transmission dudit dispositif.

5. Système selon l'une quelconque des revendications 1 à 3, dans lequel la caméra (1) et le dispositif de Fabry-Pérot (4) sont agencés de sorte qu'une image saisie par la caméra est formée à partir de rayons réfléchis par le dispositif de Fabry-Pérot, en mode de réflexion dudit dispositif.

6. Système selon l'une quelconque des revendications précédentes, dans lequel la caméra (1) et le dispositif de Fabry-Pérot (4) sont adaptés de sorte qu'une image saisie par la caméra est une image infrarouge.

7. Système selon la revendication 6, dans lequel la caméra (1) et le dispositif de Fabry-Pérot (4) sont adaptés de sorte que chaque photodétecteur de la matrice (3) produit un signal correspondant à une énergie de rayonnement reçue dans la bande de longueur d'onde comprise entre 8 $\mu$m et 12 $\mu$m.

8. Système selon la revendication 7 ensemble la revendication 4, dans lequel l'angle entre l'axe du dispositif de Fabry-Pérot et l'axe optique de l'objectif ($\theta_0$) est sensiblement égal à 41 degrés et une épaisseur optique (e) du dispositif de Fabry-Pérot est sensiblement égale à 6,85 $\mu$m, et le champ d'entrée correspondant à chaque image a un angle d'ouverture sensiblement égal à 27 degrés dans un plan contenant l'axe optique de l'objectif (A-A) et l'axe du dispositif de Fabry-Pérot (B-B).

9. Système selon l'une quelconque des revendications précédentes, dans lequel le dispositif de Fabry-Pérot (4) possède une finesse comprise entre 10 et 500.

10. Procédé de détection d'un objet et d'obtention d'une caractéristique spectrale dudit objet, suivant lequel plusieurs images de l'objet sont successivement saisies au moyen d'un système selon l'une quelconque des revendications 1 à 9, en tournant le support (10) entre deux images successives.

11. Procédé selon la revendication 10, suivant lequel les photodétecteurs de la matrice (3) sont disposés en lignes et en colonnes respectivement parallèles au plan de rotation et à l'axe de rotation du support (10), et suivant lequel les images sont saisies pendant la rotation du support à des intervalles de temps déterminés de sorte que deux images successives sont décalées d'une colonne sur la matrice de photodétecteurs.

12. Utilisation d'un procédé selon la revendication 10 ou 11, pour détecter, dans un champ d'observation, un objet dont la présence ne peut pas être distinguée ou est peu perceptible à au moins une longueur d'onde.

13. Utilisation d'un procédé selon la revendication 10 ou 11, pour révéler, dans un champ d'observation, un nuage de gaz dont la présence ne peut pas être distinguée ou est peu perceptible à au moins une longueur d'onde.

**Claims**

1. Spectrometer imaging system comprising:

    - a camera (1) comprising a lens (2) and an array of photodetectors (3) arranged so as to capture an image formed through the lens on the array;
    - a Fabry-Pérot interferential device (4) comprising two parallel plates (5, 6) separated by a fixed gap, each plate being both transparent and reflective, which Fabry-Pérot device is disposed in front of the camera lens and oriented so that an axis (B-B) of said Fabry-Pérot device perpendicular to the two plates forms, together with an optical axis of said lens (A-A), a fixed angle ($\theta_0$) larger than a half-aperture angle of an entrance field corresponding to each captured image; and
- a support (10) which is able to move in rotation about an axis of rotation (C-C) perpendicular to the optical axis (A-A) of the lens on the one hand and to the axis (B-B) of the Fabry-Pérot device on the other hand,

the camera (1) and the Fabry-Pérot device (4) being mounted on the support (10) so as to be fixed relative to one another during a rotation of the support, and so that an image captured by the camera is formed from rays which have passed the gap between the plates (5, 6) of the Fabry-Pérot device.

2. System as claimed in claim 1, in which the angle between the axis of the Fabry-Pérot device and the optical axis of the lens ($\theta_0$) is between 30 and 60 degrees.

3. System as claimed in claim 2, in which the angle between the axis of the Fabry-Pérot device and the optical axis of the lens ($\theta_0$) is between 40 and 50 degrees.

4. System as claimed in any one of claims 1 to 3, in which the camera (1) and the Fabry-Pérot device (4) are arranged so that an image captured by the camera is formed from rays which have passed through the Fabry-Pérot device when said device is in transmission mode.

5. System as claimed in any one of claims 1 to 3, in which the camera (1) and the Fabry-Pérot device (4) are disposed so that an image captured by the camera is formed from rays reflected by the Fabry-Pérot device when said device is in reflection mode.

6. System as claimed in any one of the preceding claims, in which the camera (1) and the Fabry-Pérot device (4) are adapted so that an image captured by the camera is an infrared image.

7. System as claimed in claim 6, in which the camera (1) and the Fabry-Pérot device (4) are adapted so that each photodetector in the array (3) produces a signal corresponding to a radiation energy received in the wavelength band between 8 $\mu$m and 12 $\mu$m.

8. System as claimed in claim 7 together with claim 4, in which the angle ($\theta_0$) between the axis of the Fabry-Pérot device and the optical axis of the lens is substantially equal to 41 degrees and an optical thickness (e) of the Fabry-Pérot device is substantially equal to 6.85 $\mu$m, and the entrance field corresponding to each image has an aperture angle essentially equal to 27 degrees in a plane containing the optical axis (A-A) of the lens and the axis (B-B) of the Fabry-Pérot device.

9. System as claimed in any one of the preceding claims, in which the Fabry-Pérot device (4) has a finesse of between 10 and 500.

10. Method of detecting an object and obtaining a spectral characteristic of said object, whereby several images of the object are captured in succession by means of a system as claimed in any one of claims 1 to 9 by turning the support (10) between two successive images.

11. Method as claimed in claim 10, whereby the photodetectors of the array (3) are disposed in rows and in columns respectively parallel with the plane of rotation and with the axis of rotation of the support (10), and whereby the images are captured during the rotation of the support at specific time intervals so that two successive images are offset by one column on the array of photodetectors.

12. Use of a method as claimed in claim 10 or 11 for detecting an object in a field of observation, the presence of which can not be discerned or is hardly perceptible in at least one wavelength.

13. Use of a method as claimed in claim 10 or 11 for revealing a cloud of gas in a field of observation, the presence of which can not be discerned or is hardly perceptible in at least one wavelength.

**Patentansprüche**

1. System eines bildgebenden Spektrometers mit:

   - einer ein Objektiv (2) und eine Matrix aus Fotodetektoren (3) aufweisenden Kamera (1), die eingerichtet ist, um ein Bild zu erfassen, das über das Objektiv auf der Matrix gebildet wird;
   - einer Fabry-Pérot-Interferenzvorrichtung (4), die zwei parallele Linsen (5, 6) aufweist, die um einen gleichen Abstand beabstandet sind, wobei jede Linse sowohl durchsichtig als auch reflektierend ist, wobei die Fabry-Pérot-Vorrichtung vor dem Objektiv der Kamera angeordnet und derart ausgerichtet ist, dass eine Achse (B-B) der Fabry-Perot-Vorrichtung senkrecht zu den zwei Linsen mit einer optischen Achse (A-A) des Objektivs einen gleichen Winkel ($\theta_0$) bildet, der größer ist als ein halber Öffnungswinkel eines Eintrittsfelds, das jedem erfassten Bild entspricht; und
   - einem in Drehung um eine einerseits zur optischen Achse (A-A) des Objektivs und andererseits zur Achse (B-B) der Fabry-Pérot-Vorrichtung senkrechten Rotationsachse (C-C) beweglichen Träger (10),

   wobei die Kamera (1) und die Fabry-Pérot-Vorrichtung (4) derart auf den Träger (10) montiert sind, dass sie während einer Drehung des Trägers zueinander stationär sind, und dass ein von der Kamera erfasstes Bild ausgehend von Strahlen gebildet wird, die den Raum zwischen den Linsen (5, 6) der Fabry-Pérot-Vorrichtung durchlaufen haben.

2. System nach Anspruch 1, wobei der Winkel zwischen der Achse der Fabry-Perot-Vorrichtung und der optischen Achse ($\theta_0$) zwischen 30 und 60 Grad ist.

3. System nach Anspruch 2, wobei der Winkel zwischen der Achse der Fabry-Pérot-Vorrichtung und der optischen Achse des Objektivs ($\theta_0$) zwischen 40 und 50 Grad ist.

4. System nach einem der Ansprüche 1 bis 3, wobei die Kamera (1) und die Fabry-Pérot-Vorrichtung (4) derart angeordnet sind, dass ein von der Kamera aufgenommenes Bild ausgehend von Strahlen gebildet wird, die die Fabry-Pérot-Vorrichtung im Übertragungsmodus der Vorrichtung durchlaufen haben.

5. System nach einem der Ansprüche 1 bis 3, wobei die Kamera (1) und die Fabry-Pérot-Vorrichtung (4) derart angeordnet sind, dass ein von der Kamera erfasstes Bild ausgehend von Strahlen gebildet wird, die von der Fabry-Pérot-Vorrichtung im Reflexionsmodus der Vorrichtung reflektiert werden.

6. System nach einem der vorhergehenden Ansprüche, wobei die Kamera (1) und die Fabry-Pérot-Vorrichtung (4) derart angepasst sind, dass ein von der Kamera erfasstes Bild ein Infrarotbild ist.

7. System nach Anspruch 6, wobei die Kamera (1) und die Fabry-Pérot-Vorrichtung (4) derart angepasst sind, dass jeder Fotodetektor der Matrix (3) ein Signal erzeugt, das einer empfangenen Strahlungsenergie im Wellenlängenband zwischen 8 $\mu$m und 12 $\mu$m entspricht.

8. System nach Anspruch 7 zusammen mit Anspruch 4, wobei jeder Winkel zwischen der Achse der Fabry-Pérot-Vorrichtung und der optischen Achse des Objektivs ($\theta_0$) im Wesentlichen gleich 41 Grad ist und eine optische Dicke (e) der Fabry-Pérot-Vorrichtung im Wesentlichen 6,85 $\mu$m beträgt und das Eintrittsfeld, das jedem Bild entspricht, einen Öffnungswinkel hat, der im Wesentlichen gleich 27 Grad in einer Ebene ist, die die optische Achse (A-A) des Objektivs und die Achse (B-B) der Fabry-Pérot-Vorrichtung enthält.

9. System nach einem der vorhergehenden Ansprüche, wobei die Fabry-Pérot-Vorrichtung (4) eine Feinheit zwischen 10 und 500 aufweist.

10. Verfahren zum Detektieren bzw. Erfassen eines Objekts und Erzielen eines spektralen Empfindlichkeitskurve des Objekts, gemäß dem mehrere Bilder des Objekts nacheinander mittels eines Systems nach einem der Ansprüche 1 bis 9 detektiert bzw. erfasst werden, indem der Träger (10) zwischen zwei aufeinander folgenden Bildern gedreht wird.

11. Verfahren nach Anspruch 10, wobei die Fotodetektoren der Matrix (3) in Zeilen und Spalten jeweils parallel zur Rotationsebene und zur Rotationsachse des Trägers (10) angeordnet sind und wobei die Bilder während der Drehung des Trägers in derart bestimmten Zeitintervallen erfasst werden, dass zwei aufeinander folgende Bilder auf der Matrix von Fotodetektoren um eine Spalte verschoben sind.

**12.** Einsatz eines Verfahrens nach Anspruch 10 oder 11, um in einem Beobachtungsfeld ein Objekt zu erfassen, dessen Vorhandensein nicht unterschieden werden kann oder bei mindestens einer Wellenlänge kaum wahrnehmbar ist.

**13.** Einsatz eines Verfahrens nach Anspruch 10 oder 11, um in einem Beobachtungsfeld eine Gaswolke nachzuweisen, deren Vorhandensein nicht unterschieden werden kann oder bei mindestens einer Wellenlänge kaum wahrnehmbar ist.

FIG.1.

FIG.2a.

EP 1 867 969 B1

## FIG.2b.

## FIG.3.

11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002012120 A